# EUROPEAN PATENT APPLICATION

(11) **EP 3 822 964 A1**
(43) Date of publication of application: **19.05.2021**
(21) Application number: 19209389.6
(22) Date of filing: 15.11.2019
(51) Int. Cl.: G10L 15/16, G10L 15/08

(54) **SYSTEM AND METHOD FOR ON-DEVICE OPEN-VOCABULARY KEYWORD SPOTTING**

(71) Applicant: SNIPS, 75002 Paris (FR)
(72) Inventor: BLUCHE, Théodore, 75014 Paris (FR)
(74) Representative: Verriest, Philippe

(57) **Abstract**

Device (1) comprising a keyword encoder (2), an acoustic encoder (3), a keyword detector (4);
- wherein the keyword encoder (2) is a first neural network configured to determine, for each keyword of a set of keywords (abc, bac, cba, cab), at least one parameter, the at least one parameter being determined based on a keyword representation (7), said keyword representation (7) being provided as input to the keyword encoder (2), the keyword encoder (2) being configured to communicate the at least one parameter to the keyword detector (4), for each keyword of the set of keywords (abc, bac, cba, cab);
- wherein the acoustic encoder (3) consists in a second neural network trained for automatic speech recognition, the acoustic encoder (3) being configured to take as input a set of feature vectors, each feature vector of the set of feature vector comprising at least one feature characterizing an acoustic signal (5), the acoustic encoder (3) being further configured to provide as output a set of intermediate feature vectors (6), each intermediate feature vector of the set of intermediate feature vectors (6) comprising at least one feature, and being input to the keyword detector (4);
- wherein the keyword detector (4) is a third neural network configured, by the at least one parameter, to predict, for each keyword in the set of keywords (abc, bac, cba, cab), a probability of detection of said keyword in the acoustic signal, the probability of detection (P1,P2,P3,P4) of said keyword being based on the set of intermediate feature vectors (6) provided by the acoustic encoder (3).

## Description

### TECHNICAL FIELD OF THE INVENTION

This invention relates to the field of automatic speech recognition (ASR), and more specifically to spoken language understanding (SLU) wherein the language understanding part is straightforwardly derived from the detection of specific keywords in a query.

### BACKGROUND

It is known to classify speech commands in a predefined set or to detect wakewords with tiny neural networks, typically under 500 KB. However, these methods require specific training data.

Traditional ASR based keyword spotting approaches consist in building models for keywords and "background" and computing likelihood ratios between the two, or in looking for keyword phone sequence in the predictions of an end-to-end acoustic neural network predicting phone sequences, and trying to match the keywords in predicted phones lattices or from transcription directly. These methods rely on first recognizing all phones in the sequence, and then finding sub-sequences that correspond to keywords. They may be quite sensitive to phone prediction errors, which are likely to appear often for small neural networks. To compute a confidence score at the keyword level, they need to aggregate the confidences at the phone/frame level to obtain a meaningful score, which is not straightforward.

Therefore, there is a need for an end-to-end keyword spotting device or method, with a neural network, taking audio features as inputs, and producing keyword detection confidence as output, with no specific training data, i.e. with no training data corresponding exactly to the keywords.

### SUMMARY OF THE INVENTION

The present invention provides a device comprising a keyword encoder, an acoustic encoder, a keyword detector;
- wherein the keyword encoder is a first neural network configured to determine, for each keyword of a set of keywords, at least one parameter, the at least one parameter being determined based on a keyword representation, said keyword representation being provided as input to the keyword encoder, the keyword encoder being configured to communicate the at least one parameter to the keyword detector, for each keyword of the set of keywords;
- wherein the acoustic encoder consists in a second neural network trained for automatic speech recognition, the acoustic encoder being configured to take as input a set of feature vectors, each feature vector of the set of feature vectors comprising at least one feature characterizing an acoustic signal, the acoustic encoder being further configured to provide as output a set of intermediate feature vectors, each intermediate feature vector of the set of intermediate feature vectors comprising at least one feature, and being input to the keyword detector;
- wherein the keyword detector is a third neural network configured, by the at least one parameter, to predict, for each keyword in the set of keywords (abc, bac, cba, cab), a probability of detection of said keyword in the acoustic signal, the probability of detection of said keyword being based on the set of intermediate feature vectors (6) provided by the acoustic encoder.

By convention, a set of keywords includes at least one keyword, without any limitation on the number of keywords, a set of features includes at least one feature, without any limitation on the number of features, a set of intermediate features includes at least one intermediate feature, without any limitation on the number of intermediate features. More generally, a set of objects includes at least one object, whatever the object is, and without any limitation on the number of objects.

According to these provisions:
- there is no specific training of the keyword detector and the keyword encoder with respect to training data corresponding exactly to the keywords of the set of keywords;
- the weights of the first layer of the keyword detector 4 are generic and shared by all potential keywords.
- the device can fit on micro-controllers, i.e. being less than 750 KBytes weight;
- the device can run in real-time, is accurate and robust to noise.

According to an embodiment, the invention comprises one or more of the following features, alone or in any combination technically compatible.

According to an embodiment of the invention, the keyword representation is a sequence of phones, or a sequence of characters.

According to an embodiment of the invention, the acoustic encoder is a stack and skip Long-Short-Term-Memory (LSTM) neural network, trained with Connectionist Temporal Classification.

According to an embodiment of the invention, each intermediate feature vector of the set of intermediate feature vectors is generated by a layer before the last classification layer of the LSTM neural network, advantageously by the layer next to the last classification layer of the LSTM neural network.

According to an embodiment of the invention, the keyword detector is a convolutional neural network comprising at least two layers, wherein a first layer aggregates the set of intermediate feature vectors, the aggregation being a convolution followed by a tanh activation;

According to an embodiment of the invention, an output of the first layer is another set of feature vectors, the other set of feature vectors being further aggregated before being input to the second layer, by replacing at least one subset of the other set of feature vectors by a single set of feature vectors.

According to an embodiment of the invention, a last layer of the keyword detector is a convolution followed by a sigmoïd activation, the weights of the convolution being determined, at least in part, as a fonction of the at least one parameter determined by the keyword encoder for each keyword of the set of keywords.

According to an embodiment of the invention, the keyword encoder is a bi-directional LSTM neural network, the at least one parameter being an affine transform of a concatenation of a last output of the LSTM in one direction and of another last output of the LSTM in another direction.

According to an embodiment of the invention, the keyword representation input to the keyword encoder is a sequence of one-hot vectors, encoding each phone of a sequence of phones of the keyword.

According to another aspect, the invention provides a method for detecting a keyword, by using a device comprising a keyword encoder, an acoustic encoder, and a keyword detector, the method comprising the following steps:
- determining, for each keyword of a set of keywords, at least one parameter, by using the keyword encoder, wherein the keyword encoder is a first neural network;
- configuring the keyword detector, wherein configuring comprises setting weights of a convolution performed by a layer of the keyword detector, said weights being set according to the at least one parameter determined for each keyword from the set of keywords;
- providing, as input to the acoustic encoder, a set of feature vectors, each feature vector of the set of feature vectors comprising at least one feature characterizing an acoustic signal, the acoustic encoder consisting in a second neural network trained for automatic speech recognition to generate a set of intermediate feature vectors from the set of feature vectors;
- providing, as an input to the keyword detector, the set of intermediate feature vectors generated by the acoustic encoder, wherein the keyword detector is a third neural network configured to predict, from the set of intermediate feature vectors, for each keyword of the set of keywords, a probability of detection of said keyword;
- selecting the keyword with an optimal probability of detection.

According to these provisions :
- the training dataset does not necessarily contain the keywords of the set of keywords;
- the weights of the first layer of the keyword detector 4 are generic and shared by all potential keywords;
- there is no specific training of the keyword detector and the keyword encoder with respect to training data corresponding exactly to the keywords of the set of keywords;
- the device can adapt to detect any set of keywords, without specific training data.

According to an embodiment of this aspect of the invention, the invention comprises one or more of the following features, alone or in combination technically compatible.

According to an embodiment, said probability is optimal when it is higher or lower than a predetermined threshold.

According to an embodiment, the step of determining, for each keyword of the set of keywords, at least one parameter, by using the keyword encoder, comprises a subtep of providing, for each keyword of the set of keywords, a representation of said keyword.

According to an embodiment, the representation is a sequence of phones, or a sequence of characters.

According to an embodiment, the step of configuring the keyword detector is performed offline.

According to an embodiment, the method further comprises a step of training the device, wherein the training step determines a subset of parameters, said subset of parameters being complementary to the weights set during the keyword encoder configuring step.

According to an embodiment, the training step comprises a substep of providing a training dataset comprising a plurality of training samples, and a substep of creating a set of synthetic keywords, at least one synthetic keyword of the set of synthetic keywords being extracted from each training sample of the plurality of training samples, the training of the device 1 being performed based on the set of synthetic keywords.

According to another aspect, the invention provides a computer program comprising a set of instructions executable by a processor of a computer, the set of instructions being configured to implement the method according to anyone of the embodiments of the method described hereinabove, when executed by a processor of a computer.

The invention also provides a support comprising the computer program according to the previous aspect of the invention, the support being configured to be readable by a computer so that the method according to anyone of the embodiments described hereinabove is implemented, when the computer executes the set of instructions of said computer program,.

### BRIEF DESCRIPTION OF THE DRAWINGS

The foregoing and other purposes, features, aspects and advantages of the invention will become apparent from the following detailed description of embodiments, given by way of illustration and not limitation with reference to the accompanying drawings, in which the same reference refer to similar elements or to elements having similar functions, and in which:
[Fig. 1] is a schematic representation of a device according to an embodiment of the invention.
[Fig. 2] is a schematic representation of a device according to another embodiment of the invention.
[Fig. 3] is a diagram representing the steps of the method according to an embodiment of the invention.

### DETAILED DESCRIPTION OF THE INVENTION ACCORDING TO AN EMBODIMENT

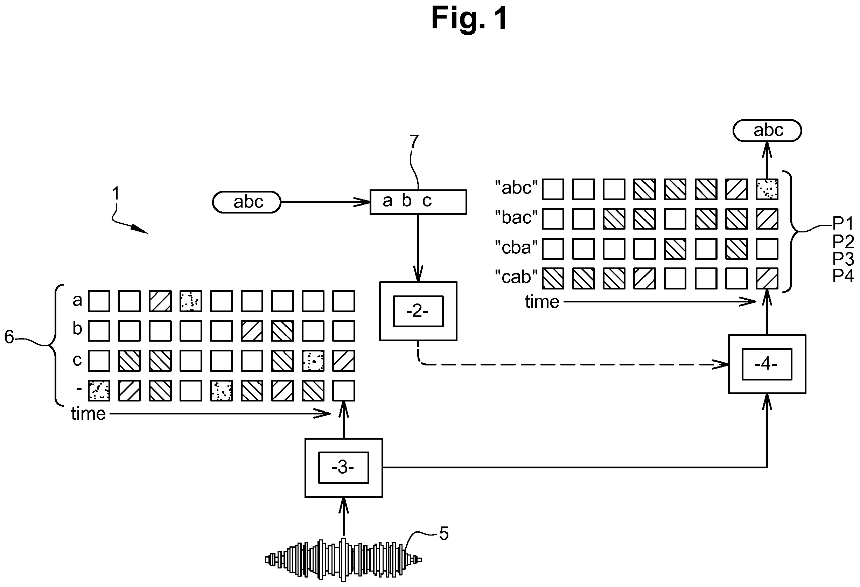

The invention, as depicted in figure 1, is a device 1 comprising three components: a keyword encoder 2, an acoustic encoder 3, and a keyword detector 4.

At inference time, the device is provided as input a set of feature vectors, each feature vector of the set of feature vectors comprising at least one feature characterizing an acoustic or audio signal 5, and to compute detection scores or probabilities P1, P2, P3, P4 for each keyword from a set of keywords abc, bac, cba, cab. This computation may be done in real-time with limited ressources.

To achieve this result, each component of the device is a neural network, which is first trained with a training dataset and then further configured. The training dataset for the step of training does not necessarily contain the keywords used at inference, and determines a subset of configuration parameters; the further configuration step may be done offline and determines a complementary subset of configuration parameters; the complementary subset of configuration parameters are dedicated to a specific configuration of the keyword detector 4, and are determined by the keyword encoder 2, for the keyword detector 4, based on the set of keywords abc, bac, cba, cab.

More specifically, the keyword encoder 2 is a first neural network configured to determine, for each keyword of a set of keywords, at least one parameter, the at least one parameter being determined based on a keyword representation 7, said keyword representation 7 being provided as input to the keyword encoder 2, the keyword encoder 2 being configured to communicate the at least one parameter to the keyword detector 4, for each keyword of the set of keywords abc, bac, cba, cab.

The keyword representation 7 may be a sequence of phones, or a sequence of characters.

As indicated hereinabove, the provision of the sequence of phones for each keyword of the set of keywords abc, bac, cba, cab may be done offline, as a further configuration step of the device 1, namely the keyword detector 4, this further configuration step being performed complementarily to the training phase the device, said training phase being dedicated to determining a first subset of configuration parameters for the device, and which is based on a training dataset which does not necessarily contain the keywords used at inference.

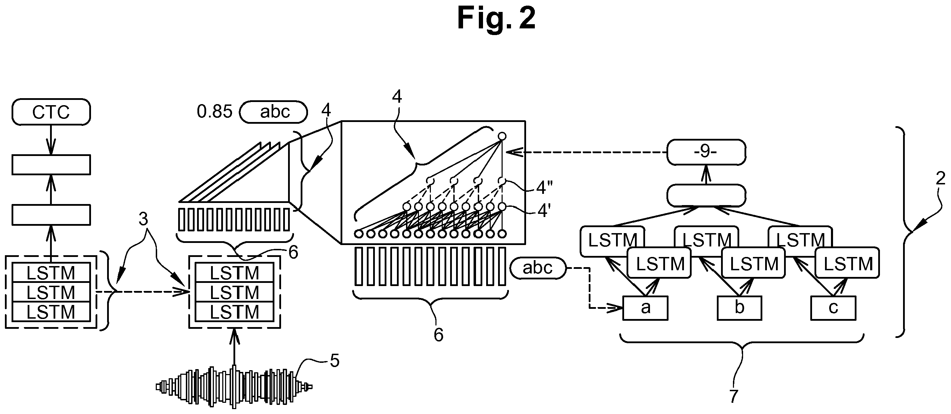

The keyword encoder 2 may for example be a bi-directional LSTM neural network, as represented in figure 2, the at least one parameter being an affine transform of a concatenation of a last output of the LSTM in one direction and of another last output of the LSTM in another direction. According to this example embodiment, the keyword representation 7 input to the keyword encoder 2 may be a sequence of one-hot vector, encoding each phone of a sequence of phones of the keyword.

The acoustic encoder 3 consists in a second neural network trained for automatic speech recognition, the acoustic encoder 3 being configured to take as input a set of feature vectors, each feature vector of the set of feature vector comprising at least one feature characterizing an acoustic signal 5, the acoustic encoder 3 being further configured to provide as output a set of intermediate feature vectors 6, each intermediate feature vector of the set of intermediate feature vectors 6 comprising at least one feature, and being input to the keyword detector 4.

The acoustic encoder 3 may be, for example, a stack and skip Long-Short-Term-Memory LSTM neural network, trained with Connectionist Temporal Classification CTC, as represented in figure 2. According to this example embodiment, each intermediate feature vector 6 of the set of intermediate feature vectors is generated by a layer before the last classification layer of the LSTM neural network, advantageously by the layer next to the last classification layer of the LSTM neural network.

The keyword detector 4 is a third neural network configured, by the at least one parameter, to predict, for each keyword in the set of keywords abc, bac, cba, cab, a detection score, or probability of detection P1,P2,P3,P4, of said keyword in the acoustic signal, the probability of detection P1,P2,P3,P4 of said keyword being based on the set of intermediate feature vectors 6 provided by the acoustic encoder 3.

The keyword detector 4 may be, for example, a convolutional neural network comprising at least two layers 4', 4", wherein a first layer 4' aggregates the set of intermediate feature vectors 6, the aggregation being a convolution followed by a tanh activation, as illustrated on figure 2; according to this example embodiment, an output of the first layer 4' is another set of feature vectors, the other set of feature vectors being further aggregated before being input to the second layer 4", by replacing at least one subset of the other set of feature vectors by a single set of feature vectors; and a last layer 4" of the keyword detector 4 is a convolution followed by a sigmoïd activation, the weights 9 of the convolution being determined, at least in part, as a fonction of the at least one parameter determined by the keyword encoder 2 for each keyword of the set of keywords abc, bac, cba, cab;

As it is well known by the man skilled in the art, a convolution of a set of feature vectors is a convoluted feature vector, the convoluted feature vector comprising at least one convoluted feature; the at least one convoluted feature being a convolution of the at least one feature of each feature vector of the set of feature vectors.

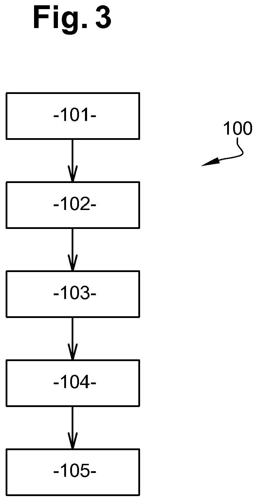

The invention also relates to a method for detecting a keyword, by using a device 1 comprising a keyword encoder 2, an acoustic encoder 3, and a keyword detector 4, the method comprising the following steps, as illustrated in figure 3 :
- determining 101, for each keyword of a set of keywords abc, bac, cba, cab, at least one parameter, by using the keyword encoder 2, wherein the keyword encoder 2 is a first neural network;
- configuring 102 the keyword detector 4, wherein configuring comprises setting weights 9 of a convolution performed by a layer of the keyword detector 4, said weights 9 being set according to the at least one parameter determined for each keyword from the set of keywords abc, bac, cba, cab;
- providing 103, as input to the acoustic encoder 2, a set of feature vectors, each feature vector of the set of feature vector comprising at least one feature characterizing an acoustic signal 5, the acoustic encoder 2 consisting in a second neural network trained for automatic speech recognition to generate a set of intermediate feature vectors 6 from the set of feature vectors;
- providing 104, as an input to the keyword detector 4, the set of intermediate feature vectors 6 generated by the acoustic encoder 2, wherein the keyword detector 4 is a third neural network configured to predict, from the set of intermediate feature vectors 5, for each keyword of the set of keywords (abc, bac, cba, cab), a probability of detection P1,P2,P3,P4 of said keyword;
- selecting 105 the keyword with an optimal probability of detection, for example if said optimal probability is higher or lower than a predetermined threshold.

The step of determining, for each keyword of a set of keywords, at least one parameter, may comprise provisioning, for each keyword of the set of keywords, a representation 7 of said keyword, said representation 7 being, for example, a sequence of phones, or a sequence of characters.

The step of configuring the keyword detector may be performed offline.

The method may further comprise a step of training the device 1; the training step determines a subset of parameters, complementary to the weights 9 set during the keyword encoder configuring step.

The training step may generally comprises a substep of providing a training dataset comprising a plurality of training samples; the training step may comprise a substep of creating a set of synthetic keywords, at least one synthetic keyword of the set of synthetic keywords being extracted from each training sample of the plurality of training samples, the training of the device 1 being performed based on the set of synthetic keywords. Thus, according to this example implementation of the method, the training dataset does not necessarily contain the keywords of the set of keywords, and the weights of the keyword detector are generic and shared by all potential keywords

According to these provisions :
- there is no specific training of the keyword detector and the keyword encoder with respect to training data corresponding exactly to the keywords of the set of keywords;
- the device can adapt to detect any set of keywords, without specific training data.

According to yet another aspect of the invention, the invention relates to a computer program, or to a readable support product comprising the same, the computer program being configured to implement the method according to anyone of the embodiments described hereinabove.

## Claims

1. Device (1) comprising a keyword encoder (2), an acoustic encoder (3), a keyword detector (4);
- wherein the keyword encoder (2) is a first neural network configured to determine, for each keyword of a set of keywords (abc, bac, cba, cab), at least one parameter, the at least one parameter being determined based on a keyword representation (7), said keyword representation (7) being provided as input to the keyword encoder (2), the keyword encoder (2) being configured to communicate the at least one parameter to the keyword detector (4), for each keyword of the set of keywords (abc, bac, cba, cab);
- wherein the acoustic encoder (3) consists in a second neural network trained for automatic speech recognition, the acoustic encoder (3) being configured to take as input a set of feature vectors, each feature vector of the set of feature vector comprising at least one feature characterizing an acoustic signal (5), the acoustic encoder (3) being further configured to provide as output a set of intermediate feature vectors (6), each intermediate feature vector of the set of intermediate feature vectors (6) comprising at least one feature, and being input to the keyword detector (4);
- wherein the keyword detector (4) is a third neural network configured, by the at least one parameter, to predict, for each keyword in the set of keywords (abc, bac, cba, cab), a probability of detection of said keyword in the acoustic signal, the probability of detection (P1,P2,P3,P4) of said keyword being based on the set of intermediate feature vectors (6) provided by the acoustic encoder (3).

2. Device (1) according to claim 1, wherein the acoustic encoder 3 is a stack and skip Long-Short-Term-Memory LSTM neural network, trained with Connectionist Temporal Classification CTC.

3. Device (1) according to claim 2, wherein each intermediate feature vector 6 of the set of intermediate feature vectors is generated by a layer before the last classification layer of the LSTM neural network, advantageously by the layer next to the last classification layer of the LSTM neural network.

4. Device (1) according to claim 1, wherein the keyword detector 4 is a convolutional neural network comprising at least two layers 4', 4", wherein a first layer 4' aggregates the set of intermediate feature vectors 6, the aggregation being a convolution followed by a tanh activation;

5. Device (1) according to claim 4, wherein an output of the first layer 4' is another set of feature vectors, the other set of feature vectors being further aggregated before being input to the second layer 4", by replacing at least one subset of the other set of feature vectors by a single set of feature vectors;

6. Device (1) according to claim 4 or 5, wherein a last layer 4" of the keyword detector 4 is a convolution followed by a sigmoïd activation, the weights 9 of the convolution being determined, at least in part, as a fonction of the at least one parameter determined by the keyword encoder 2 for each keyword of the set of keywords (abc, bac, cba, cab) ;

7. Device (1) according to claim 1, wherein the keyword encoder 2 is a bi-directional LSTM neural network, the at least one parameter being an affine transform of a concatenation of a last output of the LSTM in one direction and of another last output of the LSTM in another direction.

8. Device (1) according to claim 7, wherein the keyword representation 7 input to the keyword encoder 2 is a sequence of one-hot vector, encoding each phone of a sequence of phones of the keyword.

9. Method (100) for detecting a keyword, by using a device (1) comprising a keyword encoder (2), an acoustic encoder (3), and a keyword detector (4), the method comprising the following steps:
- determining (101), for each keyword of a set of keywords (abc, bac, cba, cab), at least one parameter, by using the keyword encoder (2), wherein the keyword encoder (2) is a first neural network;
- configuring (102) the keyword detector (4), wherein configuring comprises setting weights (9) of a convolution performed by a layer of the keyword detector (4), said weights (9) being set according to the at least one parameter determined for each keyword from the set of keywords (abc, bac, cba, cab);
- providing (103), as input to the acoustic encoder (2), a set of feature vectors, each feature vector of the set of feature vectors comprising at least one feature characterizing an acoustic signal (5), the acoustic encoder (2) consisting in a second neural network trained for automatic speech recognition to generate a set of intermediate feature vectors (6) from the set of feature vectors;
- providing (104), as an input to the keyword detector (4), the set of intermediate feature vectors (6) generated by the acoustic encoder (2), wherein the keyword detector (4) is a third neural network configured to predict, from the set of intermediate feature vectors (5), for each keyword of the set of keywords (abc, bac, cba, cab), a probability of detection (P1,P2,P3,P4) of said keyword;
- selecting (105) the keyword with an optimal probability of detection.

10. Method (100) according to claim 9, wherein the step of determining, for each keyword of the set of keywords, at least one parameter, by using the keyword encoder (2), comprises a substep of providing, for each keyword of the set of keywords, a representation (7) of said keyword.

11. Method (100) according to claim 9 or 10, further comprising a step of training the device (1), wherein the training step determines a subset of parameters, said subset of parameters being complementary to the weights (9) set during the keyword encoder configuring step.

12. Method (100) according to claim 11, wherein the training step comprises a substep of providing a training dataset comprising a plurality of training samples, and a substep of creating a set of synthetic keywords, at least one synthetic keyword of the set of synthetic keywords being extracted from each training sample of the plurality of training samples, the training of the device 1 being performed based on the set of synthetic keywords.

13. Computer program comprising a set of instructions executable by a processor of a computer, the set of instructions being configured to implement the method according to anyone of claims 9 to 12, when executed by a processor of a computer.

14. Support comprising the computer program according to claim 13, the support being configured to be readable by a computer so that when the computer executes the set of instructions of the computer program, the method according to anyone of claims 9 to 12 is implemented.
